(19) Europäisches Patentamt
European Patent Office
Office européen des brevets

(11) **EP 3 336 644 A1**

(12) **EUROPEAN PATENT APPLICATION**

(43) Date of publication:
**20.06.2018 Bulletin 2018/25**

(51) Int Cl.:
**G05D 1/00** (2006.01)  **G05D 1/10** (2006.01)
**G05D 1/08** (2006.01)

(21) Application number: **17200930.0**

(22) Date of filing: **09.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.11.2016 KR 20160149016**

(71) Applicant: **Samsung Electronics Co., Ltd.**
**Gyeonggi-do 16677 (KR)**

(72) Inventors:
• **LEE, Wuseong**
**Suwon-si, Gyeonggi-do 16677 (KR)**
• **KIM, Taekyun**
**Suwon-si, Gyeonggi-do 16677 (KR)**
• **LEE, Youngbae**
**Suwon-si, Gyeonggi-do 16677 (KR)**
• **LEE, Jungjae**
**Suwon-si, Gyeonggi-do 16677 (KR)**
• **KIM, Seungnyun**
**Suwon-si, Gyeonggi-do 16677 (KR)**
• **HEO, Changryong**
**Suwon-si, Gyeonggi-do 16677 (KR)**

(74) Representative: **HGF Limited**
**Saviour House**
**9 St. Saviourgate**
**York YO1 8NQ (GB)**

(54) **UNMANNED AERIAL VEHICLE AND METHOD FOR PHOTOGRAPHING OPERATOR USING SAME**

(57)     An unmanned aerial vehicle is provided, which includes an aerial vehicle body; a camera mounted on the body; a sensor module installed in the body to sense surrounding environment information; a radio communication module installed in the body to perform radio communication with another communication device; at least one processor installed in the body and electrically connected to the camera, the sensor module, and the radio communication module; and a memory electrically connected to the processor, wherein the memory, during flying of the unmanned aerial vehicle, stores instructions to cause the processor :
- to recognize a user's throwing gesture using the unmanned aerial vehicle,
- to determine a user direction based on a first motion vector generated by the throwing gesture,
- to predict a camera direction in a standstill location that is a target point of the unmanned aerial vehicle based on the throwing gesture, and
- to control a photographing direction of the camera

FIG. 3

EP 3 336 644 A1

Description

BACKGROUND

1. Field of the Disclosure

The present disclosure relates to an unmanned aerial vehicle and a method for photographing a subject using the same.

2. Description of the Related Art

With the recent development of aerial control technology using software and communication technology, unmanned aerial vehicles that perform aerial photography, investigation, or reconnaissance have been used in various fields. The unmanned aerial vehicles are devices capable of performing a flight with guidance control through radio waves. Recently, with the growth of photographing technology using unmanned aerial vehicles, development of various types of unmanned aerial vehicles has increased.

A user may move an unmanned aerial vehicle by controlling the unmanned aerial vehicle or setting a desired location of the unmanned aerial vehicle.

However, when a unmanned aerial vehicle is hovering in a desired location, a camera of the unmanned aerial vehicle may be in an arbitrary direction, and thus, in order to find a desired subject, a user needs to adjust the direction of the camera of the unmanned aerial vehicle, which causes inconvenience for the user.

SUMMARY

Various aspects of the present disclosure provide an unmanned aerial vehicle and a method for photographing a subject using the same, in which the direction of a user is recognized by the unmanned aerial vehicle, and if the unmanned serial vehicle arrives and hovers at a target point, the direction of a camera of the unmanned aerial vehicle is automatically adjusted such that the camera is directed to face a user, thereby being able to automatically photograph a subject.

In accordance with an aspect of the present disclosure, an unmanned aerial vehicle includes an aerial vehicle body; a camera mounted on the body; a sensor module installed in the body to sense surrounding environment information; a radio communication module installed in the body to perform radio communication with another communication device; at least one processor installed in the body and electrically connected to the camera, the sensor module, and the radio communication module; and a memory electrically connected to the processor. The memory, during flying of the unmanned aerial vehicle, stores instructions to cause the processor to recognize a user's throwing gesture of the unmanned aerial vehicle, determine a user direction based on a first motion vector generated by the throwing gesture, predict a camera direction in a standstill location that is a target point of the unmanned aerial vehicle based on the throwing gesture, and control a photographing direction of the camera such that the photographing direction and the user direction are located in a straight line in the standstill location that is the target point.

In accordance with an aspect of the present disclosure, a method for photographing a subject in an unmanned aerial vehicle includes recognizing a user's throwing gesture of the unmanned aerial vehicle; determining a user direction based on a first motion vector generated by the throwing gesture; predicting a camera direction in a standstill location that is a target point of the unmanned aerial vehicle based on the throwing gesture; controlling a photographing direction of the camera such that the photographing direction and the user direction are located in a straight line in the standstill location that is the target point; and executing a camera photographing function when the unmanned aerial vehicle arrives at the target point.

BRIEF DESCRIPTION OF THE DRAWINGS

The above and other aspects, features and advantages of embodiments of the present disclosure will be more apparent from the following description taken in conjunction with the accompanying drawings, in which:

FIG. 1 is a view illustrating the configuration of an unmanned aerial vehicle according to various embodiments of the present disclosure;
FIG. 2 is a diagram illustrating a program module (e.g., platform structure) of an unmanned aerial vehicle according to various embodiments of the present disclosure;
FIG. 3 is a flowchart illustrating a method for photographing a subject using an unmanned aerial vehicle according to various embodiments of the present disclosure;
FIG. 4 is a diagram illustrating a situation for a photographing operation of an unmanned aerial vehicle according to various embodiments of the present disclosure;
FIG. 5 is a flowchart illustrating a photographing method of an unmanned aerial vehicle according to various embodiments of the present disclosure;
FIG. 6 is a flowchart illustrating an operation algorithm of an unmanned aerial vehicle according to an embodiment of the present disclosure;
FIG. 7 is a diagram illustrating a horizontal rotation control of an unmanned aerial vehicle according to an embodiment of the present disclosure;
FIG. 8 is a diagram illustrating a method for setting the horizontal rotation angle and direction of an unmanned aerial vehicle according to an embodiment of the present disclosure;
FIG. 9 is a diagram illustrating a method for setting a camera angle of an unmanned aerial vehicle according to an embodiment of the present disclosure; FIG. 10 is a diagram illustrating a location adjustment method of an unmanned aerial vehicle according to an embodiment of the present disclosure; and FIG. 11 is a diagram illustrating a multi-photographing method for multiple points of an unmanned aerial vehicle according to an embodiment of the present disclosure.

## DETAILED DESCRIPTION

Hereinafter, various embodiments of the present disclosure will be described with reference to the accompanying drawings. However, it should be understood that the present disclosure is not limited to the specific embodiments described hereinafter, but includes various modifications, equivalents, and/or alternatives of the embodiments of the present disclosure. In the drawings, similar drawing reference numerals may be used for similar constituent elements. A singular expression may include a plural expression unless specially described.

In the description, the term "A or B" or "at least one of A and/or B" includes all possible combinations of words enumerated together. The terms "first" and "second" may describe various constituent elements, but they do not limit the corresponding constituent elements. For example, the above-described terms do not limit the order and/or importance of the corresponding constituent elements, but may be used to differentiate a constituent element from other constituent elements. When it is described that an (e.g., first) element is "connected" or "coupled" to another (e.g., second) element (e.g., functionally or communicatively), the element may be "directly connected" to the other element or "connected" to the other element through another (e.g., third) element.

In the present disclosure, the term "configured to" may be interchangeably used with, in hardware or software, "suitable to", "capable of", "changed to", "made to", "able to", or "designed to". In certain situations, the expression "device configured to" may mean that the device can do "together with another device or components". For example, the phrase "processor configured (or set) to perform A, B, and C" may mean a dedicated processor (e.g., embedded processor) for performing the corresponding operation, or a general-purpose processor (e.g., central processing unit (CPU) or application processor (AP)) that can perform the corresponding operations. The term "and/or" covers a combination of a plurality of items, or any of the plurality of items.

Various embodiments of the present disclosure relate to an unmanned aerial vehicle (UAV) and/or drone, and may be hereinafter described as an unmanned aerial vehicle or an electronic device.

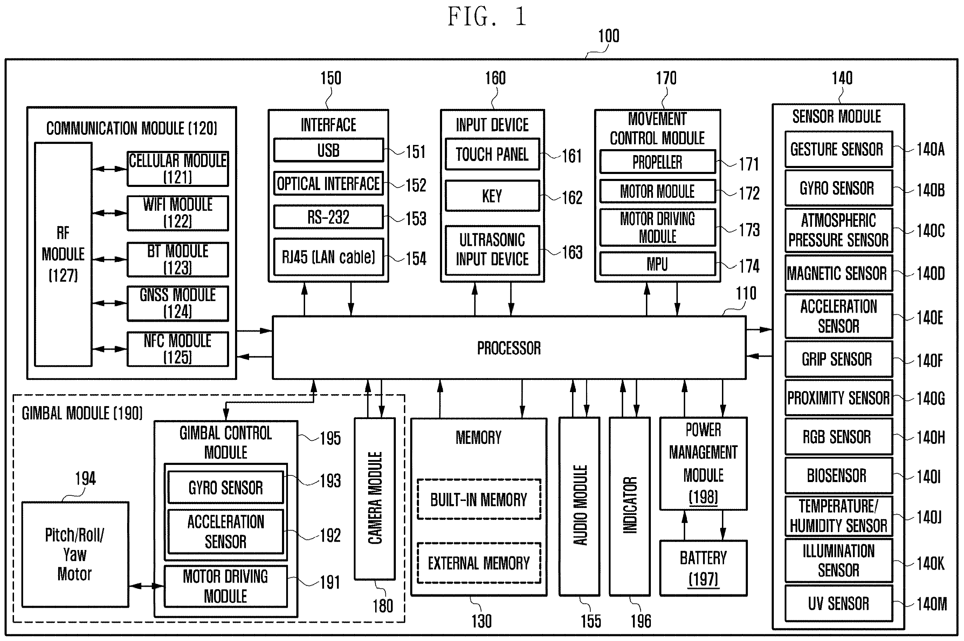

FIG. 1 is a diagram illustrating the configuration of an unmanned aerial vehicle according to various embodiments of the present disclosure.

Referring to FIG. 1, an unmanned aerial vehicle 100 or an electronic device may include at least a processor (e.g., AP) 110, a communication module 120, an interface 150, an input device 160, a sensor module 140, a memory 130, an audio module 155, an indicator 196, a power management module 198, a battery 197, a camera module 180, and a movement control module 170, and may further include a gimbal module 190.

The processor 110, which may include a filter, a low noise amplifier (LNA), or an antenna, may control a plurality of hardware or software constituent elements connected to the processor through driving of the operating system or application programs, and may perform various kinds of data processing and operations. The processor may generate a flight command of the electronic device through driving of the operating system or the application programs. For example, the processor 110 may generate a movement command using data received from the camera module 180, the sensor module 140, and the communication module 120.

The processor 110 may generate the movement command through calculation of a relative distance of an acquired subject, and may generate an altitude movement command for the unmanned aerial vehicle with vertical coordinates of the subject. The processor 110 may also generate a horizontal and azimuth angle command for the unmanned aerial vehicle with horizontal coordinates of the subject.

The communication module 120 may include a cellular module 121, a Wi-Fi module 122, a Bluetooth™ (BT) module 123, a global navigation satellite system (GNSS) module 124, a near field communication (NFC) module 125, and an RF module 127. According to various embodiments of the present disclosure, the communication module 120 may receive a control signal of the electronic device, and may transmit unmanned aerial vehicle status information and video data information to other unmanned aerial vehicles. The RF module 127 may transmit and receive a communication signal (e.g., RF signal). The RF module 127 may include, for example, a transceiver or a power amplifying module (PAM). The GNSS module 124 may output location information, such as latitude, longitude, altitude, speed, and heading information, during movement of the unmanned aerial vehicle. The location information may be calculated through measurement of accurate time and distance through the GNSS module 124. The GNSS module 124 may acquire not only the location information of the latitude, longitude, and altitude but also the accurate time together with 3D speed information. The unmanned aerial vehicle may transmit to another unmanned aerial vehicle information for confirming a real-time movement state of an unmanned photographing device through the communication module. Hereinafter, in this disclosure, the term "GPS" may be interchangeably used with the term "GNSS".

The interface 150 is a device for performing data input/output with another unmanned aerial vehicle. For example, the interface 150 may transfer a command or data input from another external device to other constituent element(s) of the unmanned aerial vehicle, or may output a command or data received from the other constituent element(s) of the unmanned aerial vehicle to a user or another external device using a universal serial bus (USB) 151, an optical interface 152, a recommend standard 232 (RS-232) 153, or an RJ45 port 154.

The input device 160 may include, for example, a touch panel 161, key 162, and an ultrasonic input device 163. The touch panel 161 may be at least one of capacitive, resistive, infrared, and ultrasonic types. Further, the touch panel 161 may further include a control circuit. The key 162 may include, for example, a physical button, an optical key, or a keypad. The ultrasonic input device 163 may sense ultrasonic waves generated from an input tool through a microphone, and may confirm data corresponding to the sensed ultrasonic waves. The unmanned aerial vehicle may receive a control input for the unmanned aerial vehicle through the input device 160. For example, if a physical power key is pressed, the power of the unmanned aerial vehicle may be cut off.

The sensor module 140 may include a part or the whole of a gesture sensor 140A capable of sensing a motion and/or gesture of the subject, a gyro sensor 140B capable of measuring an angular velocity of the flying unmanned aerial vehicle, a barometer 140C capable of measuring a barometric pressure change and/or atmospheric pressure, a magnetic sensor 140D (e.g., geomagnetic sensor, terrestrial magnetism sensor, or compass sensor) capable of measuring earth's magnetic field, an acceleration sensor 140E measuring an acceleration of the flying unmanned aerial vehicle, a grip sensor 140F, a proximity sensor 140G (e.g., an ultrasonic sensor capable of measuring a distance through measurement of an ultrasonic signal that is reflected from an object) measuring an object proximity state and distance, an RGB sensor 140H, an optical sensor (e.g., PFS or optical flow) capable of calculating a location through recognition of the bottom topography or pattern, a bio sensor 140I for user authentication, a temperature-humidity sensor 140J capable of measuring temperature and humidity, an illumination sensor 140K capable of measuring illumination, and an ultraviolet (UV) sensor 140M capable of measuring UV rays. According to various embodiments of the present disclosure, the sensor module 140 may calculate a posture of the unmanned aerial vehicle. The posture information of the unmanned aerial vehicle may be shared with the movement module control.

The memory 130 may include a built-in memory and an external memory. The unmanned aerial vehicle may store a command or data related to at least one other constituent element. The memory 130 may store software and/or a program. The program may include a kernel, middleware, an application programming interface (API) and/or an application program (or application).

The audio module 155 may bidirectionally convert, for example, sound and an electrical signal. The audio module 155 may include a speaker and a microphone, and may process input/output sound information.

The indicator 196 may display a specific state of the unmanned aerial vehicle or a part thereof (e.g., processor), for example, an operation state or a charging state. Further, the indicator 196 may display a flying state and an operation mode of the unmanned aerial vehicle.

The power management module 198 may manage, for example, power of the unmanned aerial vehicle. In an embodiment of the present disclosure, the power management module 198 may include a power management integrated circuit (PMIC), a charging IC, a battery 197, or a battery gauge. The PMIC may be a wired and/or wireless charging type. The wireless charging type may include, for example, a magnetic resonance type, a magnetic induction type, or an electromagnetic wave type, and may further include an additional circuit for wireless charging, for example, a coil loop, a resonance circuit, or a rectifier. The battery gauge may measure, for example, a battery residual amount, charging voltage, current, or temperature.

The battery 197 may include, for example, a charging battery and/or a solar cell.

The camera module 180 may be configured in the unmanned aerial vehicle or in the gimbal module 190 if the unmanned aerial vehicle includes the gimbal. The camera module 180 may include a lens, an image sensor, an image processor, and a camera controller. The camera controller may adjust a subject composition and/or a camera angle (e.g., photographing angle) through adjustment of camera lens angles in the upper, the lower, the left, and the right directions based on composition information and/or camera control information output from the processor 110. The image sensor may include a row driver, a pixel array, and a column driver. The image processor may include an image preprocessor, an image post-processor, a still image codec, and a moving image codec. The image processor may be included in the processor 110. The camera controller may control focusing and tracking.

The camera module 180 may perform a photographing operation in a photographing mode. The camera module 180 may be affected by motion of the unmanned aerial vehicle. In order to minimize the photographing change of the camera module 180 depending on the motion of the unmanned aerial vehicle, the camera module 180 may be located on the gimbal module 190.

The movement control module 170 may control the posture and movement of the unmanned aerial vehicle using the location and posture information of the unmanned aerial vehicle. The movement control module 170 may control the roll, pitch, yaw, and throttle of the unmanned aerial vehicle in accordance with the acquired location and posture information. The movement control module 170 may perform a hovering flight operation, an autonomous flight operation control based on an autonomous flight command (e.g., distance movement, altitude movement, or horizontal and azimuth angle command) provided to the processor, and a flight operation control in accordance with a received user's input command. For example, the movement module may be a quadcopter, and may include a plurality of movement control modules 170 (e.g., microprocessor units (MPU)), a motor driving module 173, a motor module 172, and a propeller 171. The plurality of movement control modules (e.g., MPU) 170 may output control data for rotating the propeller 171 corresponding to the flight operation control. The motor driving module 173 may convert motor control data corresponding to the output of the movement control module into a driving signal to be output. The motor may control the rotation of the corresponding propeller 171 based on the driving signal of the corresponding motor driving module 173.

The gimbal module 190 may include, for example, a gimbal control module 195, a gyro sensor 193, an acceleration sensor 192, a motor driving module 191, and a motor 194. The camera module 180 may be included in the gimbal module 190.

The gimbal module 190 may generate compensation data in accordance with the motion of the unmanned aerial vehicle. The compensation data may be data for controlling at least a part of a pitch or a roll of the camera module 180. For example, a roll motor and a pitch motor may compensate for a roll and a pitch of the camera module 180 in accordance with the motion of the unmanned aerial vehicle. The camera module is mounted on the gimbal module 190 to offset the motion due to the rotation (e.g., pitch and roll) of the unmanned aerial vehicle (e.g., multi-copter), and thus the camera module 180 can be stabilized in a triangular position. The gimbal module 190 enables the camera module 180 to maintain a constant tilt regardless of the motion of the unmanned aerial vehicle, and thus a stable image can be photographed by the camera module 180. The gimbal control module 195 may include the sensor module including the gyro sensor 193 and the acceleration sensor 192. The gimbal control module 195 may generate a control signal of the gimbal motor driving module 191 through the analysis of measured values of the sensor including the gyro sensor 193 and the acceleration sensor 192, and thus may drive the motor of the gimbal module 190.

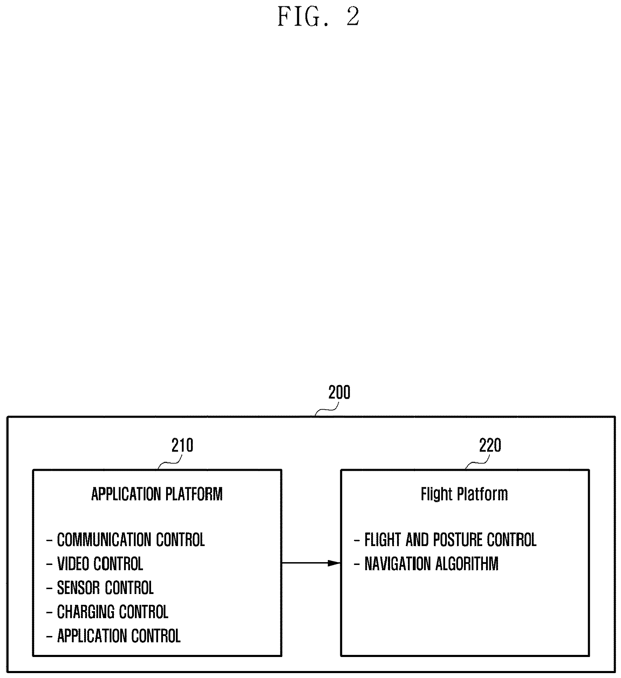

FIG. 2 is a diagram illustrating a program module (e.g., platform structure) of an unmanned aerial vehicle according to various embodiments of the present disclosure.

Referring to FIG. 2, an unmanned aerial vehicle 200 may include an application platform 210 and a flight platform 220. The unmanned aerial vehicle 200 may include at least one of the application platform 210 for flying the unmanned aerial vehicle and providing services through reception of the control signal through wireless interlocking, and the flight platform 220 for controlling the flight in accordance with a navigation algorithm. Here, the unmanned aerial vehicle 200 may be the unmanned aerial vehicle 100 of FIG. 1.

The application platform 210 may perform connectivity of constituent elements of the unmanned aerial vehicle, video control, sensor control, charging control, or operation change in accordance with user applications. The flight platform 220 may execute flight, posture control, and navigation algorithm of the unmanned aerial vehicle. The flight platform 220 may be executed by the processor or the movement control module.

The application platform 210 may transfer a control signal to the flight platform 220 while performing communication, video, sensor, or charging control.

According to various embodiments of the present disclosure, the processor 110 may acquire an image of a subject photographed through the camera module 180. The processor 110 may generate a command for flight control of the unmanned aerial vehicle 100 through analysis of the acquired image. For example, the processor 110 may generate size information from the acquired subject, movement state, relative distance and altitude between a photographing device and the subject, and azimuth angle information. The processor 110 may generate a follow control signal for the unmanned aerial vehicle using the calculated information. The flight platform 220 may control the movement control module to perform a flight of the unmanned aerial vehicle (e.g., posture and movement control of the unmanned aerial vehicle) based on the received control signal.

According to various embodiments of the present disclosure, the processor 110 may measure the location, flight posture, posture angular velocity, and acceleration of the unmanned aerial vehicle through a GPS module (e.g., GNSS module 124) and a sensor module (e.g., sensor module 140). Output information from the GPS module and the sensor module may be generated during the flight, and may be the basic information of a control signal for navigation/autonomous control of the unmanned aerial vehicle. Information on an atmospheric pressure sensor capable of measuring an altitude through an atmospheric pressure difference in accordance with the flight of the unmanned aerial vehicle and ultrasonic sensors performing precise altitude measurement at the low altitude may be used as the basic information. In addition, a control data signal received in a remote controller and battery status information of the unmanned aerial vehicle may be used as the basic information.

The unmanned aerial vehicle may fly, for example, using a plurality of propellers. The propeller may convert the rotating force of the motor into a driving force. The unmanned aerial vehicle may be named depending on the number of rotors (e.g., propellers). That is, if the number of rotors is 4, 6, or 8, the unmanned aerial vehicle may be called a quadcopter, hexacopter, or octocopter.

The unmanned aerial vehicle may control the propellers based on the received control signal. The unmanned aerial vehicle may fly on the two principles of lift and torque. For rotation, the unmanned aerial vehicle may rotate half of the multiple propellers clockwise (CW), and may rotate the other half of the multiple propellers counterclockwise (CCW). 3D coordinates in accordance with the flight of the unmanned aerial vehicle may be determined on pitch (Y)/roll (Z)/yaw (Z). The unmanned aerial vehicle may fly through tilting in front and back or left and right directions. If the unmanned aerial vehicle is tilted, the direction of an air flow generated from the propeller module (e.g., rotor) may be changed. For example, if the unmanned aerial vehicle leans forward, the air may flow up and down as well as somewhat backward. Through this, the unmanned aerial vehicle may move forward in accordance with the law of action and reaction to such an extent that the air is pushed backward. The unmanned aerial vehicle may be tilted in a corresponding direction by reducing the speed of the front side of the unmanned aerial vehicle and heightening the speed of the back side thereof. Since this method is common in upper, lower, left, and right directions, the unmanned aerial vehicle may be tilted to move only by speed adjustment of the motor module (e.g., rotor).

In the unmanned aerial vehicle, the flight platform 220 receives the control signal generated from the application platform 210, and controls the motor module in accordance with the control signal, such that it can perform posture control for pitch (Y)/roll (X)/yaw (Z) of the unmanned aerial vehicle and flight control in accordance with a movement path.

In an embodiment of the present disclosure, the unmanned aerial vehicle 200 is a device that can fly under the control of a radio signal in a state where a person does not take an aerial vehicle and may be used for various purposes and usages, such as for the purpose of personal photographing (e.g., target photographing)" aerial inspection, reconnaissance, and for other business purposes.

In an embodiment of the present disclosure, the camera module 180 may photograph an image of an object to be photographed (e.g., target) under the control of the processor 110. The object to be photographed may be, for example, an object having mobility, such as a human, an animal, or a vehicle, but is not limited thereto. The photographed image acquired from the camera module 180 may be transferred to the processor 110.

In an embodiment of the present disclosure, the processor 110 may operate to execute a user direction measurement algorithm during flying of the unmanned aerial vehicle. After the unmanned aerial vehicle is turned on, the processor 110 may recognize a throwing gesture for throwing the unmanned aerial vehicle, and may measure the user direction that is opposite to the throwing gesture direction in response to the user's throwing gesture. For example, the throwing gesture may be a preparation operation for a user having the unmanned aerial vehicle in his/her hand to throw the unmanned aerial vehicle before the unmanned aerial vehicle performs a free flight. While the user performs the throwing gesture for throwing the unmanned aerial vehicle, the unmanned aerial vehicle may calculate a first motion vector in a direction in which the unmanned aerial vehicle moves from an initial start point of the throwing gesture to a free flight start point based on sensor information, and may recognize the user direction that is a direction opposite to the calculated first motion vector. Here, the user direction may be a direction opposite to the first motion vector, but in accordance with the setup, it may be a direction that coincides with the first motion vector or a rotating direction having a predetermined angle against the first motion vector.

In an embodiment of the present disclosure, the processor 110 may recognize a time when the unmanned aerial vehicle is separated from the user's hand as a free flight time based on the change information from gravitational acceleration. For example, the processor 110 may extract initial direction information based on at least one of vector information at a time when the unmanned aerial vehicle is separated from the user's hand and vector information for a predetermined time from the time when the unmanned aerial vehicle is separated from the user's hand. As an example, the processor 110 may set the initial direction information to correspond to the free flight direction of the unmanned aerial vehicle, but is not limited thereto.

In an embodiment of the present disclosure, the unmanned aerial vehicle may support a function capable of selecting photographing in a self-photography (e.g., selfie) direction for the user, in a certain direction desired by the user (e.g., true north direction, direction of 90 degrees to the right based on the self-photography (e.g., selfie) direction), or in a direction opposite to the user in accordance with an option setup before the flight start. Further, the unmanned aerial vehicle may support a function capable of selecting single photographing or multi photographing in accordance with the option setup before the flight start.

In an embodiment of the present disclosure, the processor 110 may confirm the user direction when the unmanned aerial vehicle performs a free flight, and may control at least one of a camera location of the unmanned aerial vehicle, an altitude of the unmanned aerial vehicle, a rotating direction (e.g., roll (F), pitch (θ), and yaw (Ψ) values), and a posture.

In an embodiment of the present disclosure, the processor 110 may recognize a free flight start time, and may calculate a second motion vector that is measured while the unmanned aerial vehicle performs the free flight from the free flight start time.

In an embodiment of the present disclosure, if a certain direction that is set based on the user direction is set in addition to the user direction, or if an error occurs between a certain direction calculated corresponding to the first motion vector and the second motion vector calculated during the free flight, the processor 110 may control at least one of the camera location in the set certain direction, the altitude of the unmanned aerial vehicle, the rotating direction (e.g., roll (F), pitch (θ), and yaw (Ψ) values), and the posture through calculation of a flight path, a rotating angle, and an acceleration of the unmanned aerial vehicle. Through this, the unmanned aerial vehicle may be adjusted such that the body of the unmanned aerial vehicle is directed to face the location set by the user during the free flight or after arrival at the target point.

In an embodiment of the present disclosure, the processor 110 may predict the location and the posture during hovering at the target point through a predicted path until the unmanned aerial vehicle arrives at the target point, and may calculate an adjustment value for adjusting the camera location through the prediction information.

In an embodiment of the present disclosure, if the camera location is directed toward the user direction, the processor 110 may adjust the pitch angle of the camera in accordance with the altitude of the unmanned aerial vehicle using the user's input information or sensor information, or may calculate the adjustment value for controlling the altitude of the unmanned aerial vehicle.

In an embodiment of the present disclosure, the processor 110 may calculate the adjustment value for adjusting the camera location during the flight, and may operate to perform hovering in a state where the camera location is adjusted to be in the direction determined by the user (e.g., self-photography (e.g., selfie) direction or certain direction) at the time when the unmanned aerial vehicle finally arrives at the target point.

In an embodiment of the present disclosure, the processor 110 may calculate the adjustment value for adjusting the camera location after arrival at the target point, and may control the flight of the unmanned aerial vehicle after the arrival at the target point such that the camera location is changed to the direction determined by the user.

In this embodiment of the present disclosure, the processor 110 may operate to determine the camera location at the throwing gesture recognition time, to recognize the present environment as the self-photography (e.g., selfie) environment if the camera location is directed to face the user, and then to calculate the adjustment value of the camera location such that the camera location is directed to face the user after the arrival at the target point. Further, if the camera location is opposite to the user direction, the processor 110 may recognize that the present environment is an external photographing environment, and may operate to calculate the adjustment value of the camera location such that the camera location is directed to face the direction that is opposite to the user direction after the arrival at the target point.

In an embodiment of the present disclosure, the sensor module 140 may collect information for measuring the location of the unmanned aerial vehicle, speed, acceleration, tilt, shaking, and flight distance. The sensor module 140, for example, may measure a physical amount, sense the flying or operation state of the unmanned aerial vehicle, and convert the measured or sensed information into an electrical signal.

In an embodiment of the present disclosure, an unmanned aerial vehicle includes an aerial vehicle body; a camera mounted on the body; a sensor module installed in the body to sense surrounding environment information; a radio communication module installed in the body to perform radio communication with another communication device; at least one processor installed in the body and electrically connected to the camera, the sensor module, and the radio communication module; and a memory electrically connected to the processor. The memory, during flying of the unmanned aerial vehicle, stores instructions to cause the processor to recognize a user's throwing gesture using the unmanned aerial vehicle, to determine a user direction based on a first motion vector generated by the throwing gesture, to predict a camera direction in a standstill location that is a target point of the unmanned aerial vehicle based on the throwing gesture, and to control a photographing direction of the camera such that the photographing direction and the user direction are located in a straight line in the standstill location that is the target point of the unmanned aerial vehicle.

In an embodiment of the present disclosure, the unmanned aerial vehicle may further include a movement control module including at least one of a motor driving the body by a rotating force, a motor driving module, and a propeller. The instructions may cause the processor to determine a free flight direction, a flight path, a flight rotating force, and a flight speed of the unmanned aerial vehicle, to predict the target point of the free flight and a flight posture at the target point, to calculate the camera photographing direction by the flight posture at the predicted target point, to calculate an adjustment angle and a rotating direction for adjusting the camera photographing direction if the camera photographing direction is different from the user direction at the target point, and to control the movement control module to change the camera photographing direction in accordance with the determined adjustment angle and rotating direction.

In an embodiment of the present disclosure, the instructions may cause the processor to recognize a free flight time after the user's gesture, to calculate a second motion vector from the free flight time to an arrival time at the target point, to determine whether the user direction is changed through comparison of the first motion vector and the second motion vector with each other, and to calculate an adjustment value for adjusting at least one of a free flight path, a rotating angle and a rotating direction of the body such that the camera photographing direction by the second motion vector coincides with the user direction during an arrival at the standstill location if the second motion vector and the first motion vector do not coincide with each other.

In an embodiment of the present disclosure, the user direction may be at least one of a direction opposite to the first motion vector, a direction rotated to have a constant angle based on the first motion vector, and a direction that coincides with the first motion vector.

In an embodiment of the present disclosure, the instructions may cause the processor to determine the camera photographing direction at a first location point when a free flight starts, and to calculate an adjustment value for adjusting at least one of a free flight path, a rotating angle and a rotating direction of the body such that the camera photographing direction is located in a first direction in which the camera photographing direction is directed to face the user at a second location point of the target point if the camera photographing direction is directed to face the user when the free flight starts, and to calculate the adjustment value for adjusting at least one of the free flight path, the rotating angle, and the rotating direction of the body such that the camera photographing direction is directed to face a second direction that is opposite to the first direction at the second location point if the camera photographing direction is opposite to the user direction when the free flight starts.

In an embodiment of the present disclosure, the instructions may cause the processor to calculate an angle adjustment value of the camera such that the camera is directed to face the user at the standstill location using a free flight distance and camera angle information at a free flight start time, and to adjust an angle of the camera at the target point.

In an embodiment of the present disclosure, the instructions may cause the processor to compare an eye height of the user with altitude information at which the unmanned aerial vehicle hovers if the unmanned aerial vehicle arrives at the target point, and to adjust an altitude of the unmanned aerial vehicle to maintain a predetermined distance from the eye height of the user.

In an embodiment of the present disclosure, the instructions may cause the processor to determine that the unmanned aerial vehicle arrives at the target point if a predetermined time elapses based on a free flight start time of the unmanned aerial vehicle or if the unmanned aerial vehicle reaches a predetermined altitude height, and to perform hovering with interruption of a free flight.

In an embodiment of the present disclosure, the instructions may cause the processor to photograph an image using the camera automatically or after a predetermined time elapses if the unmanned aerial vehicle arrives at the target point.

In an embodiment of the present disclosure, the instructions may cause the processor to determine respective movement paths, rotating angles, and rotating directions for the unmanned aerial vehicle to move from the standstill location to predetermined points during an arrival at the target point if a photographing function of the unmanned aerial vehicle is set to a multi-photographing operation.

In an embodiment of the present disclosure, the instructions may cause the processor to photograph a first image in a first location that is a multi-point after a predetermined time elapses after an arrival at the target point during the multi-photographing operation, to operate to move the aerial vehicle to a predetermined second location in accordance with the determined movement paths, rotating angles, and rotating directions, to photograph a second image in the moved second location, and to repeat the moving and photographing operations.

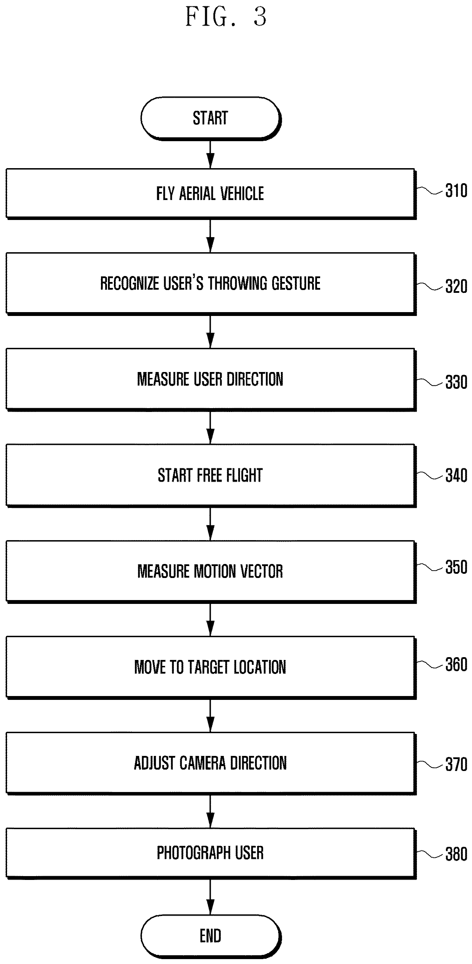

FIG. 3 is a flowchart illustrating a method for photographing a subject using an unmanned aerial vehicle according to various embodiments of the present disclosure.

Referring to FIG. 3, according to an embodiment of the present disclosure, at step 310, the unmanned aerial vehicle may be driven in accordance with a user's request. Hereinafter, the operation of the unmanned aerial vehicle may be controlled by processor 110, and for convenience in explanation, the method will be described as the operation of the unmanned aerial vehicle.

In an embodiment of the present disclosure, the unmanned aerial vehicle may support a setup option for recognizing a user direction. For example, a user may configure the unmanned aerial vehicle to recognize the user direction when a free flight starts. The unmanned aerial vehicle may be set to recognize the user direction. However, the user may set other directions (e.g., a direction that is opposite to the user direction or a direction having a certain angle based on the user direction) in addition to the user direction.

At step 320, the unmanned aerial vehicle may recognize a user's throwing gesture based on sensor information collected from the sensor module 140, and at step 330, the unmanned aerial vehicle may determine the user direction that is opposite to the direction of the throwing gesture.

For example, the throwing gesture may be a preparation operation for the user having the unmanned aerial vehicle in his/her hand to throw the unmanned aerial vehicle before the unmanned aerial vehicle performs the free flight. While the user having the unmanned aerial vehicle in his/her hand performs the throwing gesture for throwing the unmanned aerial vehicle, the unmanned aerial vehicle may calculate a first motion vector in a direction in which the unmanned aerial vehicle moves from an initial start point of the throwing gesture to the free flight start point based on the sensor information from the gyro sensor 140B or magnetic sensor 140D, and may determine the user direction that is the direction opposite to the calculated first motion vector.

The unmanned aerial vehicle may determine a free flight direction, a flight path, a flight rotating force, or a flight speed of the unmanned aerial vehicle based on at least one of a force generated by the throwing gesture, a direction, and a speed, and may predict a standstill location (e.g., target point) of the free flight and a flight posture at the target point. The unmanned aerial vehicle may confirm the camera photographing direction by the flight posture at the predicted target point.

The unmanned aerial vehicle may determine whether the predicted camera photographing direction (e.g., direction in which the camera of the unmanned aerial vehicle is directed) at the target point coincides with the user direction (e.g., direction opposite to the motion vector direction), and if the predicted camera photographing direction at the target point does not coincide with the user direction, the unmanned aerial vehicle may change the free flight direction, the flight path, the flight rotating force, and the flight speed of the unmanned aerial vehicle such that the user direction coincides with the predicted camera photographing direction at the target point.

In an embodiment of the present disclosure, the unmanned aerial vehicle may determine the type of the user's throwing gesture, and may perform photographing with a camera function that corresponds to the type of the throwing gesture. For example, if the throwing gesture is a first type of throwing straightforward, the unmanned aerial vehicle may be set to a self-photograph (e.g., selfie) function, and may take a self-photograph (e.g., selfie) of the user after arrival at the target point. As another example, if the throwing gesture is a second type of throwing with a rotation in the right direction, the unmanned aerial vehicle may be set to a panoramic photographing function for photographing as the unmanned aerial vehicle is rotated in the right direction, and may take panoramic images as being rotated in the right direction after the arrival at the target point. As still another example, if the throwing gesture is a third type of throwing with a rotation in the left direction, the unmanned aerial vehicle may be set to a panoramic photographing function for photographing as the unmanned aerial vehicle is rotated in the left direction, and may take panoramic images as being rotated in the left direction after the arrival at the target point.

At step 340, the unmanned aerial vehicle may start the free flight after being separated from the user's hand. The unmanned aerial vehicle may recognize the time when it is separated from the user's hand and starts the free flight based on a gravity acceleration change amount, and may start the free flight.

At step 350, the unmanned aerial vehicle may measure a flight motion vector based on a location point at a free flight start time. Here, the flight motion vector may be a second motion vector that is discriminated from the first motion vector that is generated during the user's throwing gesture. The second motion vector may have 3D coordinate (e.g., roll (F), pitch (θ), and yaw (Ψ)) values. Here, the roll value may mean the extent of rotation based on X-axis (e.g., forward/backward direction of the aerial vehicle), and the pitch value may mean the extent of rotation based on Y-axis (e.g., left/right direction of the aerial vehicle). The yaw value may mean the extent of rotation based on Z-axis (e.g., vertical direction of the aerial vehicle).

At step 360, the unmanned aerial vehicle may move to the target point that is the standstill location through the free flight. In an embodiment of the present disclosure, the unmanned aerial vehicle may fly up to a predetermined altitude to be hovering, or may determine that it arrives at the target point after a predetermined time elapses from the free flight start time.

In an embodiment of the present disclosure, the unmanned aerial vehicle may determine the target point based on at least one of user direction information, vector information at a time when the unmanned aerial vehicle is separated from the user's hand, and initial vector information for a predetermined time from the time when the unmanned aerial vehicle is separated from the user's hand.

At step 370, the unmanned aerial vehicle may adjust the camera photographing direction such that the camera photographing direction coincides with the user direction to face the user during arrival at the target point. In an embodiment of the present disclosure, the unmanned aerial vehicle may calculate an adjustment value for adjusting the camera photographing direction (e.g., direction to which the camera of the aerial vehicle is directed) such that the camera photographing direction is directed to face the camera direction based on the target point and the flight posture at the target point, and may apply the calculated adjustment value. For example, the adjustment value may include at least one of the rotating angle at which the camera on the unmanned aerial vehicle body moves such that the reference direction that is the camera mount direction coincides with the user direction, the rotating direction, and a control angle for adjusting the pitch angle of the camera according to the flight altitude.

Here, the step 370 may precede the step 360, but is not limited thereto. In an embodiment of the present disclosure, the unmanned aerial vehicle may determine whether the user direction is changed during the free flight through comparison of the second motion vector that is measured during the flight from the free flight start to the standstill location (e.g., target point) with the first motion vector that is measured during the throwing gesture. If the determined flight route is changed due to an external environment (e.g., wind, obstacle, or the like) during the free flight, the unmanned aerial vehicle may change a free flight path, a flight path, a flight rotating force, and a flight speed of the unmanned aerial vehicle such that the predicted camera photographing direction (e.g., direction to which the camera of the aerial vehicle is directed) at the target point coincides with the user direction (e.g., opposite direction to the motion vector direction).

At step 380, the unmanned aerial vehicle may photograph a subject. Since the unmanned aerial vehicle is adjusted to face the user direction in accordance with the camera direction location and posture adjustment, it can photograph the subject, for example, the user. As an example, the unmanned aerial vehicle can photograph the user if a predetermined time elapses after the arrival at the target point.

In an embodiment of the present disclosure, a method for photographing a subject in an unmanned aerial vehicle includes recognizing a user's throwing gesture using the unmanned aerial vehicle; determining a user direction based on a first motion vector generated by the throwing gesture; predicting a camera direction in a standstill location that is a target point of the unmanned aerial vehicle based on the throwing gesture; controlling a photographing direction of the camera such that the photographing direction and the user direction are located in a straight line in the standstill location that is the target point; and executing a camera photographing function when the unmanned aerial vehicle arrives at the target point.

In an embodiment of the present disclosure, controlling the camera photographing direction such that the photographing direction and the user direction are located in a straight line may include determining a free flight direction, a flight path, a flight rotating force, and a flight speed of the unmanned aerial vehicle; predicting the target point of the free flight and a flight posture at the target point; calculating the camera photographing direction by the flight posture at the predicted target point; calculating an adjustment angle and a rotating direction for adjusting the camera photographing direction if the camera photographing direction is different from the user direction at the target point; and changing the camera photographing direction in accordance with the determined adjustment angle and rotating direction during the free flight of the unmanned aerial vehicle.

In an embodiment of the present disclosure, controlling the camera photographing direction such that the photographing direction and the user direction are located in a straight line may include recognizing a free flight time based on gravity acceleration information after the user's gesture; calculating a second motion vector from the free flight time to an arrival time at the target point; determining whether the user direction is changed through comparison of the first motion vector and the second motion vector with each other; and adjusting at least one of a free flight path, a rotating angle, and a rotating direction of the unmanned aerial vehicle such that the camera photographing direction by the second motion vector coincides with the user direction if the second motion vector and the first motion vector do not coincide with each other.

In an embodiment of the present disclosure, controlling the camera photographing direction may include determining the camera photographing direction at a first location point when a free flight starts; calculating an adjustment value for adjusting at least one of a free flight path, a rotating angle, and a rotating direction of the unmanned aerial vehicle such that the camera photographing direction is located in a first direction in which the camera photographing direction is directed to face the user at a second location point of the target point if the camera photographing direction is directed to face the user when the free flight starts; calculating the adjustment value for adjusting the at least one of the free flight path, the rotating angle, and the rotating direction of the unmanned aerial vehicle such that the camera photographing direction is directed to face a second direction that is opposite to the first direction at the second location point if the camera photographing direction is opposite to the user direction when the free flight starts; and adjusting the camera photographing direction by the calculated adjustment value.

In an embodiment of the present disclosure, controlling the camera photographing direction may include calculating an angle adjustment value of the camera such that the camera is directed to face the user at the standstill location using a free flight distance of the unmanned aerial vehicle and camera angle information at a free flight start time; and adjusting an angle of the camera during an arrival at the target point.

In an embodiment of the present disclosure, controlling the camera photographing direction may include comparing an eye height of the user with altitude information at which the unmanned aerial vehicle hovers if the unmanned aerial vehicle arrives at the target point; and adjusting an altitude of the unmanned aerial vehicle to maintain a predetermined distance from the eye height of the user.

In an embodiment of the present disclosure, executing the camera photographing function may include photographing an image using the camera automatically or after a predetermined time elapses if the unmanned aerial vehicle arrives at the target point.

In an embodiment of the present disclosure, executing the camera photographing function may include determining respective flight paths, rotating angles, and rotating directions for the unmanned aerial vehicle to move to predetermined multiple points based on the target point for multi-photographing if the multi-photographing is set; and repeating the moving operation to the determined multiple points and the photographing operation if the unmanned aerial vehicle arrives at the target point.

In an embodiment of the present disclosure, recognizing the user's gesture may include determining a type of the user's gesture; and performing the photographing operation with different options of camera photographing functions in accordance with the type of the user's gesture in executing the camera functions.

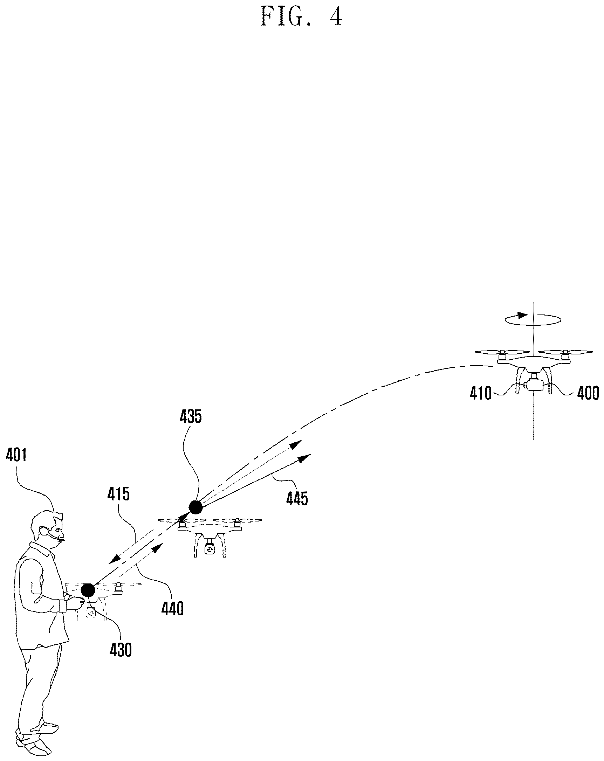

FIG. 4 is a diagram illustrating a situation for a photographing operation of an unmanned aerial vehicle according to various embodiments of the present disclosure.

Referring to FIG. 4, a user 401 may drive an unmanned aerial vehicle 400 in a first location 430, perform a throwing gesture toward a specific direction such as to arrive at a target point, and throw the unmanned aerial vehicle 400. The unmanned aerial vehicle 400 moves by the throwing gesture, and may measure a motion vector in accordance with a motion using sensor information while it is separated from the hand of the user 401 and performs a free flight.

First, the unmanned aerial vehicle 400 may recognize a user's throwing gesture that is performed in a state where the user has the unmanned aerial vehicle in his/her hand, and may measure a first motion vector 440 from a first location 430 to a second location 435 in which the unmanned aerial vehicle is separated from the user's hand and performs a free flight. The unmanned aerial vehicle 400 may determine a user direction 415 that is opposite to the first motion vector 440, and may start the free flight from the second location 435.

Next, the unmanned aerial vehicle 400 may measure a second motion vector 445 in accordance with a motion while it is separated from the user's hand to start the free flight in the second location 435 and performs the free flight.

On the other hand, the unmanned aerial vehicle may measure an acceleration direction, an acceleration amount, a rotating direction, and a rotation amount when the aerial vehicle performs the free flight through an inertia measurement algorithm. Further, the unmanned aerial vehicle 400 may calculate acceleration/deceleration directions until the unmanned aerial vehicle arrives at a target point such that a camera photographing direction is directed to face a user direction 415 through comparison of the second motion vector 445 with the first motion vector 440, and may calculate a rotating angle for posture adjustment.

The unmanned aerial vehicle 400 may determine a target point at which the unmanned aerial vehicle finally arrives to stop the free flight, and may hover at the target point. In an embodiment of the present disclosure, the unmanned aerial vehicle 400 may determine the target point if the height of the unmanned aerial vehicle reaches a predetermined height or if a predetermine time elapses after the unmanned aerial vehicle starts the flight, but the present disclosure is not limited thereto.

In an embodiment of the present disclosure of the present disclosure, the unmanned aerial vehicle 400 hovers in a posture in which the photographing direction of a camera 410 is directed to face the user when it arrives at the target point, and thus can photograph the subject, that is, the user, without any separate operation.

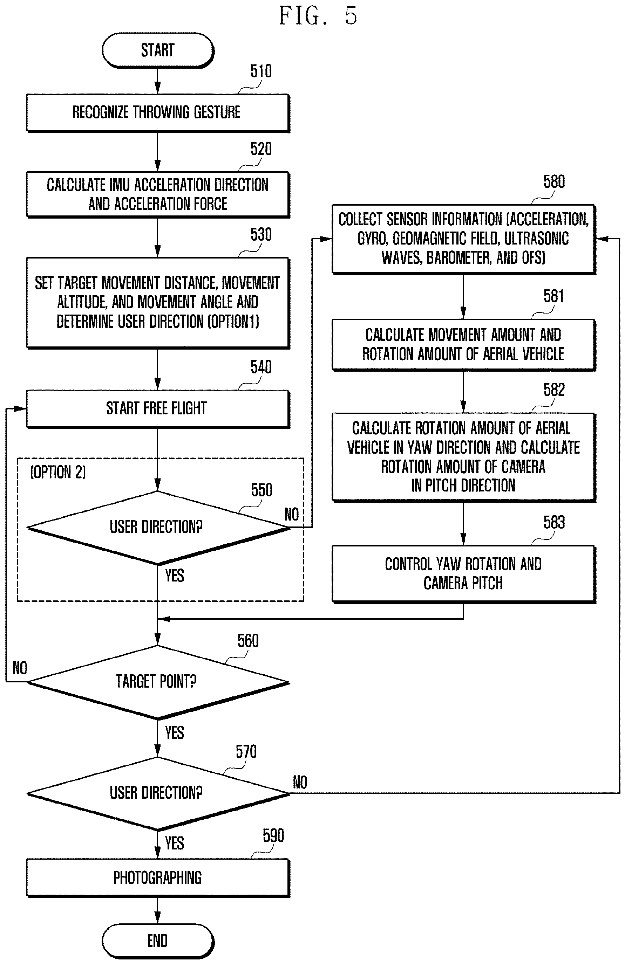

FIG. 5 is a flowchart illustrating a photographing method of an unmanned aerial vehicle according to various embodiments of the present disclosure.

Referring to FIG. 5, at step 510, an unmanned aerial vehicle may recognize a user's throwing gesture. A user may perform a preparation operation for throwing the unmanned aerial vehicle toward a specific direction in a specific location, and may perform the throwing gesture in a state where the user has the unmanned aerial vehicle in his/her hand.

At step 520, the unmanned aerial vehicle may calculate an acceleration direction and an acceleration force of the unmanned aerial vehicle through the user's throwing gesture in a state where the user has the unmanned aerial vehicle in his/her hand using an inertial measurement unit (IMU). The unmanned aerial vehicle may determine a first motion vector by the throwing gesture.

At step 530, the unmanned aerial vehicle may determine a movement distance to the target point, a movement altitude, a movement angle, and a user direction based on the acceleration direction and the acceleration force.

In this case, the unmanned aerial vehicle may selectively determine the user direction having the direction opposite to the first motion vector before a free flight starts. For example, the unmanned aerial vehicle may set the photographing direction of the camera installed on the aerial vehicle body as a reference direction, and may calculate a rotating angle for gesture adjustment such that the unmanned aerial vehicle hovers in a direction in which the reference direction coincides with the user direction when the unmanned aerial vehicle arrives at the target point.

In an embodiment of the present disclosure, if the flight starts in a state where the camera location is directed to face the user, the unmanned aerial vehicle may recognize that the purpose of the flight is to photograph the user, and may set the camera location to be directed to face the user direction after the unmanned aerial vehicle arrives at the target point. Further, if the flight starts in a state where the camera location is directed to face the opposite direction to the user, the unmanned aerial vehicle may recognize that the purpose of the flight is to photograph an outside scene, and may set the camera location to be directed to face the direction opposite to the user direction after the unmanned aerial vehicle arrives at the target point.

At step 540, the unmanned aerial vehicle may be separated from the user's hand and may perform the free flight. In this case, the unmanned aerial vehicle may recognize the time when it is separated from the user's hand and starts the free flight, and may measure a second motion vector in accordance with the free flight movement based on the free flight start time.

Selectively, at step 550, the unmanned aerial vehicle may determine whether the camera photographing direction is set toward the user direction or a certain direction while the unmanned aerial vehicle performs the free flight or is rotated. In this case, the step 550 may be omitted. For example, the unmanned aerial vehicle may predict a flight posture when it arrives at the target point, and may confirm the camera photographing direction by the flight posture at the predicted target point. The unmanned aerial vehicle may continuously calculate whether the camera photographing direction when it arrives at the target point coincides with the user direction during the free flight through comparison of the first motion vector and the second motion vector with each other.

In an embodiment of the present disclosure, if the camera photographing direction when the unmanned aerial vehicle arrives at the standstill location, that is, the target point, does not coincide with the user direction while the unmanned aerial vehicle performs the free flight, the unmanned aerial vehicle proceeds to step 580 to collect sensor information during the free flight. For example, the unmanned aerial vehicle may collect the sensor information using at least one of an acceleration sensor, a gyro sensor, a geomagnetic sensor, an ultrasonic sensor, an atmospheric barometer, and an optical flow sensor (OFS).

Next, at step 581, the unmanned aerial vehicle may calculate a movement amount and a rotation amount of the free flight, and at step 582, it may calculate the rotation amount in a yaw direction and the rotation amount in a camera pitch direction. At step 583, the unmanned aerial vehicle may control the yaw direction rotation of the aerial vehicle and the camera pitch such that the camera photographing direction when the unmanned aerial vehicle arrives at the target point coincides with the user direction based on the calculated value.

The unmanned aerial vehicle according to the present disclosure may primarily recognize the user's throwing gesture using the sensor information, determine the user direction opposite to the first motion vector, and determine the free flight direction, the flight path, the flight rotating force, and the flight speed such that the user direction coincides with the photographing direction (e.g., reference direction) of the camera installed in the unmanned aerial vehicle. Further, the unmanned aerial vehicle may secondarily acquire the sensor information during the free flight, and may measure the second motion vector based on the free flight time. The unmanned aerial vehicle may determine whether the predicted free flight path is a variance through comparison of the first motion vector and the second motion vector with each other, and if the flight path is a variance, it may adjust the camera photographing direction such that the camera photographing direction is directed to face the user through calculation of the adjustment value.

On the other hand, at step 560, the unmanned aerial vehicle determines whether it arrives at the target point, and if it arrives at the target point, the unmanned aerial vehicle may determine whether the camera photographing direction is directed to face the user direction at step 570. If the camera photographing direction is directed to face the user direction, the unmanned aerial vehicle may proceed to step 590 to photograph the user.

In an embodiment of the present disclosure, if a predetermined condition is satisfied after arriving at the target point, the unmanned aerial vehicle may support a function of automatically executing the photographing.

In an embodiment of the present disclosure, the unmanned aerial vehicle may support multi-point photographing. For example, after the unmanned aerial vehicle arrives at the target point, the user may desire to photograph the user at four points as moving by an angle of 90 degrees around the user. The user may set multiple points and angles in advance before the unmanned aerial vehicle performs flight, and the unmanned aerial vehicle may photograph the user by moving to multiple points in accordance with the setup information.

On the other hand, at step 570, if the unmanned aerial vehicle arrives at the target point, but does not face the user, the unmanned aerial vehicle may proceed to step 580 to collect sensor information such that the camera direction is adjusted to face the user, to perform steps 581, 582, and 583 to control the camera location such that the camera is directed to face the user, and then to start photographing the user. On the other hand, in the embodiment of the present disclosure of FIG. 5, the unmanned aerial vehicle may be set to recognize the user direction. However, if the camera photographing direction is a certain direction set by the user, the above-described operation can be performed in the same manner.

In an embodiment of the present disclosure, the unmanned aerial vehicle may recognize the throwing gesture, control at least one of the posture, the altitude, and the direction of the unmanned aerial vehicle such that the unmanned aerial vehicle is directed to face the user at the target point based on the motion vectors and the user direction information generated by the recognized throwing gesture, and arrive at the target point through the free flight from the time when it is separated from the user's hand.

In another embodiment of the present disclosure, the unmanned aerial vehicle may recognize the throwing gesture, determine the motion vectors and the user direction information generated by the recognized gesture, and operate to change at least one of the posture, the altitude, and the direction of the unmanned aerial vehicle through correction of the flight direction during the free flight such that the unmanned aerial vehicle can face the user at the target point based on the sensor information acquired during the free flight while the unmanned aerial vehicle performs a projectile flight based on the speed and direction information by the user's throwing force.

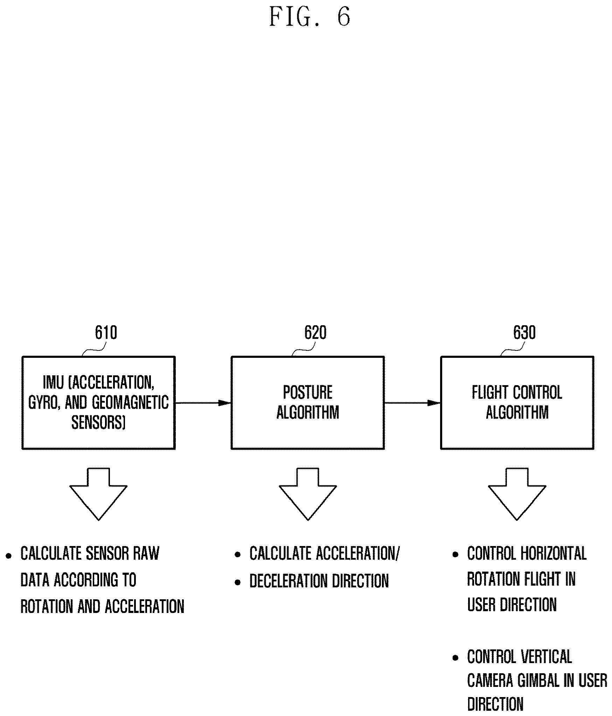

FIG. 6 is a flowchart illustrating an operation algorithm of an unmanned aerial vehicle according to an embodiment of the present disclosure.

Referring to FIG. 6, an unmanned aerial vehicle according to an embodiment of the present disclosure may adjust the flight rotation and the angle thereof such that the camera photographing direction is directed to face the user direction based on an initial predicted path of the unmanned aerial vehicle using sensor information during the free flight or after an arrival at the target point. For this, the unmanned aerial vehicle may calculate the sensor information in accordance with a rotation amount and an acceleration of the flight using an IMU 610 (e.g., sensor module, such as an acceleration sensor, a gyro sensor, and a geomagnetic sensor). The IMU 610 may calculate an acceleration direction, and acceleration amount, a rotating direction, and rotation amount of the unmanned aerial vehicle from a flight start to hovering at the target point of the unmanned aerial vehicle using the sensor information.

In an embodiment of the present disclosure, the unmanned aerial vehicle may calculate an acceleration or deceleration direction through applying of a posture algorithm 620, and may calculate a rotating direction and an angle according to the rotation, for example, a camera direction and a proceeding direction. In this case, the rotating direction and the rotation amount of the unmanned aerial vehicle may interlock with the information acquired from the geomagnetic sensor to improve the measurement accuracy.

For example, the unmanned aerial vehicle may predict the location and the posture of the unmanned aerial vehicle during hovering at the target point through a predicted path until the unmanned aerial vehicle arrives at the target point through applying of the posture algorithm 620, and may calculate an adjustment value for adjusting the camera location through the prediction information.

In an embodiment of the present disclosure, the unmanned aerial vehicle may determine the rotating angle such that a reference point (e.g., photographing direction of a camera installed in the unmanned aerial vehicle) coincides with the user direction through applying flight control algorithm 630, and may change the body rotation of the unmanned aerial vehicle and the pitch angle of the camera through determination of a vertical angle of the camera based on the reference point.

As described above, in various embodiments of the present disclosure, the unmanned aerial vehicle may direct the camera photographing direction to face the user when the unmanned aerial vehicle arrives at the target point through adjustment of the camera photographing direction such that the reference point is directed toward the user direction, that is, the user direction and the camera photographing direction are located in a straight line, using the sensor and the algorithm built in the unmanned aerial vehicle without addition of a separate hardware configuration. Accordingly, it becomes possible to photograph the user without any separate operation and to photograph a certain direction desired by the user.

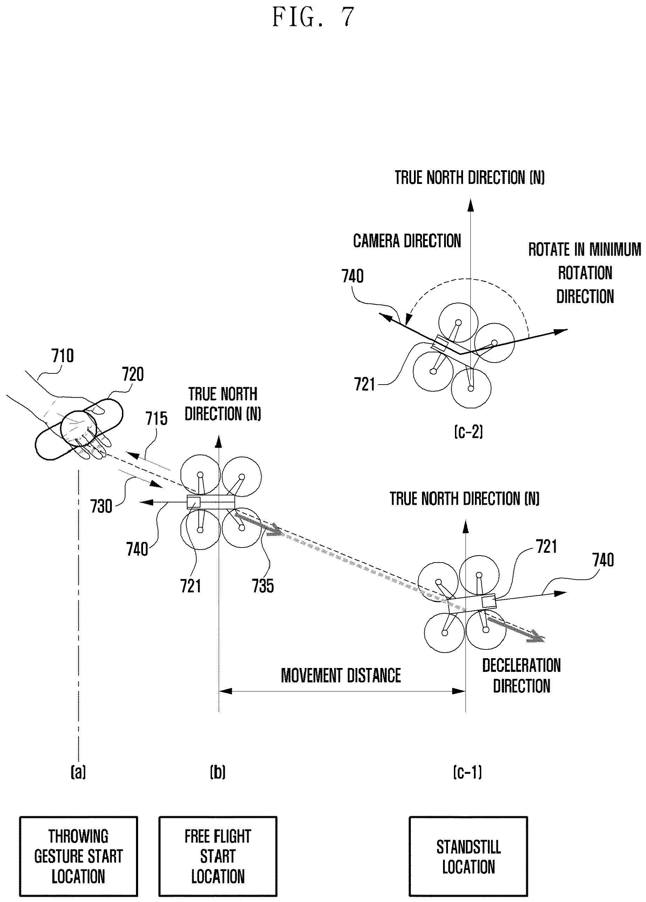

FIG. 7 is a diagram illustrating a horizontal rotation control of an unmanned aerial vehicle according to an embodiment of the present disclosure.

Referring to FIG. 7, an unmanned aerial vehicle 720 may control the posture of the unmanned aerial vehicle by measuring changes of a body rotation and straight movement using an IMU which may contain a gyro sensor and an acceleration sensor.

For example, a user 710 may perform a throwing gesture in a state where the user has an unmanned aerial vehicle 720 in his/her hand in location [a]. Then, the unmanned aerial vehicle may recognize the throwing gesture through sensor information, and may measure a first motion vector 730 that is generated while the unmanned aerial vehicle is separated from the user's hand at location [a] and starts a free flight at location [b]. The unmanned aerial vehicle may calculate a user direction 715 that is a direction opposite to the first motion vector 730.

In this case, the unmanned aerial vehicle 720 may determine a free flight direction, a flight path, a flight rotating force, and a flight speed of the unmanned aerial vehicle, and may predict a flight posture in a standstill location (e.g., target point) of the free flight and the target point.

If the user 710 throws the unmanned aerial vehicle 720, the unmanned aerial vehicle 720 may determine an acceleration level and an acceleration direction of the free flight based on at least one of sensor information generated from the user's throwing gesture and the user's throwing force, and may calculate the movement direction and the rotating direction of the unmanned aerial vehicle using the IMU during the free flight.

In this case, the unmanned aerial vehicle may recognize a free flight start time when the unmanned aerial vehicle is separated from the user's hand, and may measure a second motion vector 735 that is generated from the free flight start location [b] to a target point, that is, a standstill location [c-1]. Further, since the unmanned aerial vehicle 720 is decelerated at a time when the unmanned aerial vehicle 720 is in a standstill state, the deceleration direction of the unmanned aerial vehicle 720 can be measured. The unmanned aerial vehicle 720 may adjust the photographing direction 721 of the camera such that the photographing direction coincides with the user direction 715 or another direction set by the user in the location where the unmanned aerial vehicle 720 becomes in a standstill state based on the deceleration direction.

For example, if the unmanned aerial vehicle 720 is in a standstill state with a flight posture as indicated in [c-1] in the standstill location, the photographing direction 740 of the camera in the standstill location may be a posture that is not directed to face the user.

The unmanned aerial vehicle 720 may confirm the camera photographing direction in the standstill location using the camera photographing direction in the standstill location, the free flight direction (e.g., determined as the acceleration direction and the deceleration direction), and the rotating direction and the rotation amount of the unmanned aerial vehicle measured by the IMU, and may calculate an adjustment value for adjusting the camera photographing direction to the user direction. The unmanned aerial vehicle 720 may control the rotation thereof such that the user direction 715 coincides with the camera photographing direction 740 as shown in the standstill location [c-2] based on the adjustment value of the camera location. The locations [c-1] and [c-2] may be substantially equal to each other based on the center of gravity of the unmanned aerial vehicle 720.

Here, although the rotation of the body of the unmanned aerial vehicle 720 may change the camera location to the user direction through rotation of the body after an arrival at the target point, the unmanned aerial vehicle 720 may be implemented to calculate the adjustment value for adjusting the camera direction in real time even during the flight and to make the camera photographing direction 740 coincide with the user direction 715 as shown in [c-2] such that the camera is directed to face the user.

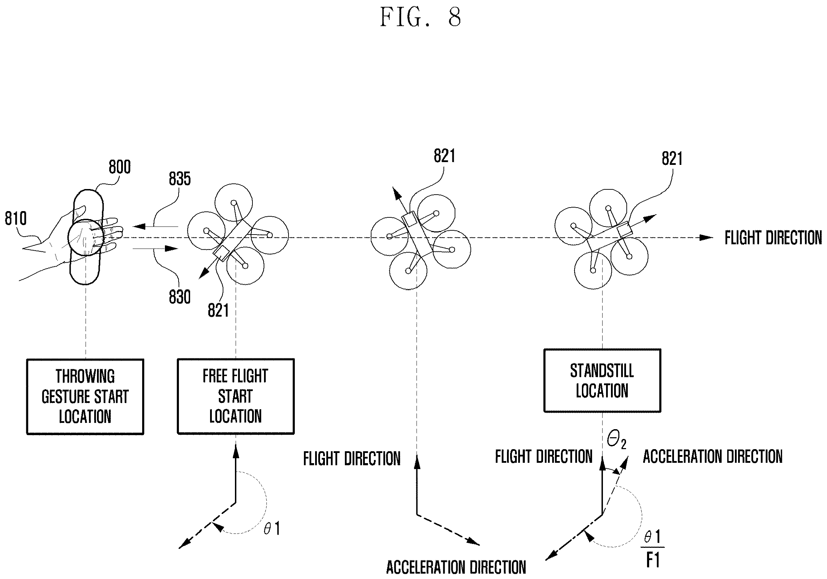

FIG. 8 is a diagram illustrating a method for setting the horizontal rotation angle and direction of an unmanned aerial vehicle according to an embodiment of the present disclosure.

Referring to FIG. 8, an unmanned aerial vehicle 800 may set the rotating direction of the body of the unmanned aerial vehicle 800 for adjusting the camera photographing direction to a certain direction set by a user 810, for example, a user direction 835, based on the rotating direction of the flight of the unmanned aerial vehicle 800 and the camera photographing direction. The unmanned aerial vehicle 800 may measure a motion vector 830 for a time measured from a start location in which the user 810, having the unmanned aerial vehicle 800 in his/her hand, throws the unmanned aerial vehicle 800 to a location in which the unmanned aerial vehicle 800 is separated from the hand of the user 810, that is, a free flight start location, and may determine the user direction 835 that is a direction opposite to the motion vector. If the user 810 throws the unmanned aerial vehicle 800 at the start location, the unmanned aerial vehicle 800 may be separated from the hand of the user 810 to start the free flight.

For example, if the flight direction and the camera photographing direction coincide with each other, the unmanned aerial vehicle 800 may set the flight direction and the acceleration direction to $\theta_1$, and may set the rotating angle at which the unmanned aerial vehicle 800 is rotated during the free flight to F1 Thereafter, if the unmanned aerial vehicle 800 arrives at the target point to be in a standstill location, it may be assumed that an angle between the camera photographing direction of the unmanned aerial vehicle 800 and the acceleration direction is $\theta_2$. The unmanned aerial vehicle 800 may measure an acceleration angle $\theta_1$ and a deceleration angle $\theta_2$ based on the camera photographing direction of the unmanned aerial vehicle 800 using an IMU, and may measure a rotation amount F1 of the unmanned aerial vehicle. Accordingly, $\theta_2$ becomes the sum of $\theta_1$ and F1, and the rotating angle for rotating the unmanned aerial vehicle in the user direction may be $\theta_2$-180°. If $\theta_2$-180° is greater than 0°, the unmanned aerial vehicle is rotated clockwise, whereas if $\theta_2$-180° is less than 0°, the unmanned aerial vehicle is rotated counterclockwise, such that the unmanned aerial vehicle 800 may be rotated at the minimum angle in the user direction. Using the above-described method, the unmanned aerial vehicle 800 may set the angle during the horizontal rotation after the unmanned aerial vehicle 800 arrives at the target point, and may determine the direction for the rotation.

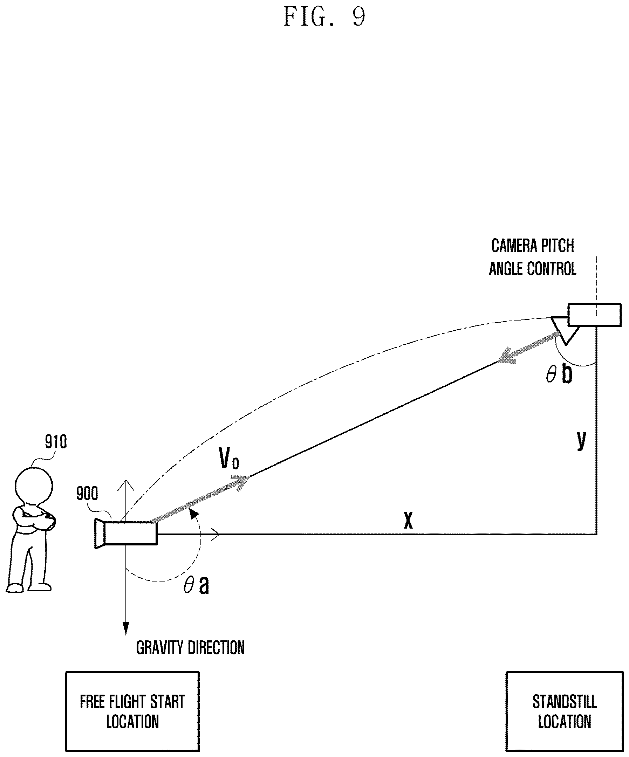

FIG. 9 is a diagram illustrating a method for setting a camera angle of an unmanned aerial vehicle according to an embodiment of the present disclosure.

Referring to FIG. 9, an unmanned aerial vehicle 900 may adjust a camera angle such that a camera of the unmanned aerial vehicle 900 is directed to face a user 910.

In an embodiment of the present disclosure, the unmanned aerial vehicle 900 may use a flight distance of the unmanned aerial vehicle to adjust the camera angle, or may adjust the camera angle using an angle at a flight start time.

As an example, a standstill location of the unmanned aerial vehicle 900 may be set by a throwing force level (e.g., acceleration force) of the user 910 and a throwing direction. If the unmanned aerial vehicle 900 flies up to the standstill location, a horizontal direction movement distance x may be calculated using an OFS, and a vertical direction movement distance y may be calculated in association with an atmospheric pressure sensor and an ultrasonic sensor.

In the unmanned aerial vehicle 900, a camera pitch control angle $\theta_b$ at a standstill time may be calculated using the calculated horizontal/vertical movement distances x and y and the following trigonometric function of Equation (1):

$$\theta_b = \tan^{-1}(x/y) \quad \dots(1)$$

The unmanned aerial vehicle 900 may calculate the camera pitch angle such that the camera can photograph the user when the unmanned aerial vehicle arrives at the target point using the calculated adjustment value, and may adjust the camera angle in accordance with the calculated angle.

As another example, the unmanned aerial vehicle 900 may calculate a movement angle and an acceleration level of the drone based on the gravity direction using an IMU when the flight is started by the user. For example, the unmanned aerial vehicle 900 may set a movement location (e.g., target point) of the unmanned aerial vehicle based on the calculated gravity direction vector and an initial motion direction vector Vo of the unmanned aerial vehicle. In this case, the unmanned aerial vehicle 900 may calculate an initial movement angle $\theta_a$ from the initial acceleration direction vector Vo of the unmanned aerial vehicle, and may calculate the camera pitch control angle $\theta_b$ during an arrival at the target point using the following Equation (2):

$$\theta_b = 180° - \theta_a \quad \dots(2)$$

The unmanned aerial vehicle 900 may calculate the camera pitch angle using the above-described calculation formula, and may adjust the camera angle such that the camera can photograph the user when the unmanned aerial vehicle arrives at the target point in accordance with the calculated angle.

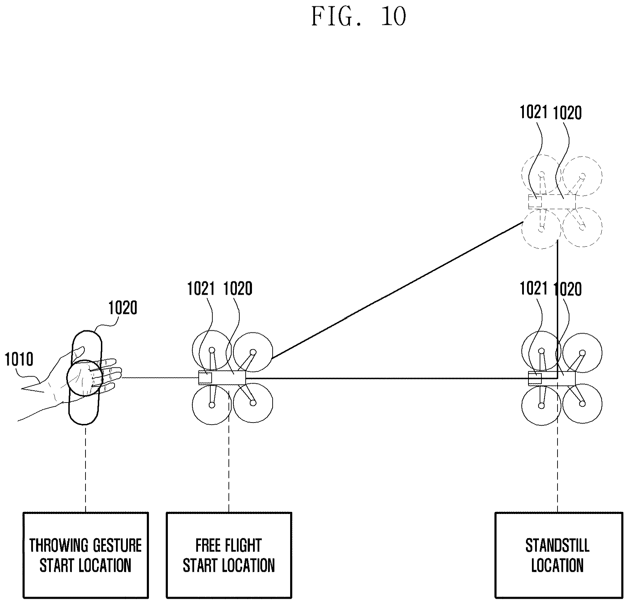

FIG. 10 is a diagram illustrating a location adjustment method of an unmanned aerial vehicle according to an embodiment of the present disclosure.

Referring to FIG. 10, if a camera photographing location is directed to face a user direction while a throwing gesture is recognized, an unmanned aerial vehicle 1020 may adjust altitude information of the unmanned aerial vehicle 1020 corresponding to a user's eye height in accordance with an altitude of the unmanned aerial vehicle using the user's height information or the sensor information. For example, a user 1010 may drive the unmanned aerial vehicle and may throw the unmanned aerial vehicle 1020 in a throwing gesture start location. The unmanned aerial vehicle 1020 may start a free flight at a time when the unmanned aerial vehicle is separated from the user's hand, that is, from a free flight start location.

In this case, during a free flight after starting the free flight, the unmanned aerial vehicle 1020 may hover in a location that is higher than the user's eye height. For example, if the unmanned aerial vehicle 1020 hovers in the location that is higher than the user in a state where the photographing direction of the camera 1021 is directed to face the user at a standstill time, the unmanned aerial vehicle 1020 may adjust the altitude to match the user's eye height, and may start photographing the user.

As an example, the unmanned aerial vehicle 1020 may control the altitude based on size information of the user's face collected through the camera, or may adjust the altitude through calculation of the altitude value using the user's height information input by the user.

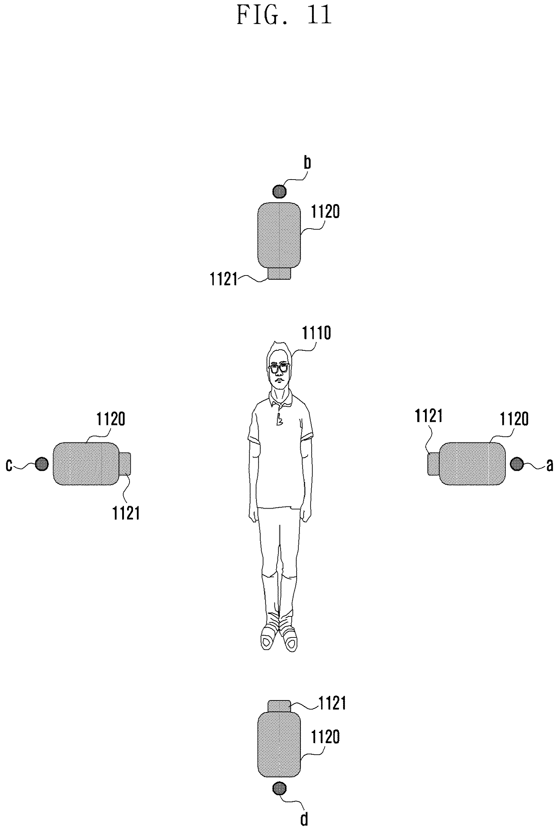

FIG. 11 is a diagram illustrating a multi-photographing method for multiple points of an unmanned aerial vehicle according to an embodiment of the present disclosure.

Referring to FIG. 11, an unmanned aerial vehicle 1120 may support a function capable of selecting photographing in a self-photography (e.g., selfie) direction for a user, photographing in a certain direction desired by the user (e.g., true north direction, direction of 90° to the right based on the self-photography (e.g., selfie) direction), or photographing in a direction opposite to the user in accordance with an option setup before a flight starts. Further, the unmanned aerial vehicle may support a function capable of selecting single photographing or multi photographing in accordance with the option setup before the flight starts.

For example, a user 1110 may select multi photographing at four points based on input from the user, and then may throw the unmanned aerial vehicle 1120. If the unmanned aerial vehicle flies and arrives at a target point, it may adjust the location of the camera 1121 such that the camera 1121 is directed to face the user. For example, if it is assumed that location *a* is an initial target point, the unmanned aerial vehicle may photograph the user in location *a* in accordance with a predetermined condition based on input from the user 1110. Next, the unmanned aerial vehicle 1120 may move to location *b* in accordance with the predetermined condition, adjust the location of the camera 1110 such that the camera 1110 is directed to face the user in location *b*, and then photograph the user. Further, the unmanned aerial vehicle may move to location c and location d to continuously photograph the user. Accordingly, the user can easily do the multi photographing using the unmanned aerial vehicle 1120. In an embodiment of the present disclosure, user's self-photography (e.g., selfie) is taught, but if the camera direction is a direction opposite to the user direction (e.g., direction for taking a scenery picture), it may be possible to obtain an effect of photographing scenes in the upper, the lower, the left, and the right directions around the user.

The term "module" used in the present disclosure may refer to, for example, a unit including one or more combinations of hardware, software, and firmware. The "module" may be interchangeable with a term, such as "unit", "logic", "logical block", "component", "circuit", or the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an application specific integrated circuit (ASIC) chip, a field programmable gate array (FPGA), and a programmable logic device for performing certain operations which have been known or are to be developed in the future.

At least a part of a device (e.g., modules or their functions) or a method (e.g., operations) may be implemented by instructions stored in computer-readable media (e.g., memory 130) in the form of program modules. If instructions are executed by a processor (e.g., processor 110), the processor may perform a function corresponding to the instructions. The computer-readable media may include hard disks, floppy disks, magnetic media (e.g., magnetic tapes), optical media (e.g., CD-ROM or DVD), magneto-optical media (e.g., floptical disks), and built-in memories. The instructions may include code created by a compiler or code that can be executed by an interpreter. Modules or programming modules may include one or more components, remove part of them, or include other components. The operations performed by modules, programming modules, or the other components may be executed in serial, parallel, repetitive or heuristic fashion. Part of the operations can be executed in any other order, skipped, or executed with additional operations.

It will be understood that the above-described embodiments of the present disclosure are examples to help easily understanding the contents of the present disclosure and do not limit the scope of the present disclosure. Accordingly, the scope of the present disclosure is defined by the appended claims and their equivalents, and it will be construed that all corrections and modifications derived from the meanings and scope of the following claims and the equivalent concept fall within the scope of the present disclosure.

**Claims**

1. An unmanned aerial vehicle comprising:

an aerial vehicle body;

a camera mounted on the body;

a sensor module installed in the body to sense surrounding environment information;

a radio communication module installed in the body to perform radio communication with another communication device;

at least one processor installed in the body and electrically connected to the camera, the sensor module, and the radio communication module; and

a memory electrically connected to the processor,

wherein the memory, during flying of the unmanned aerial vehicle, stores instructions to cause the processor to recognize a user's throwing gesture of the unmanned aerial vehicle, determine a user direction based on a first motion vector generated by the throwing gesture, predict a camera direction in a standstill location that is a target point of the unmanned aerial vehicle based on the throwing gesture, and control a photographing direction of the camera such that the photographing direction and the user direction are located in a straight line in the standstill location that is the target point.

2. The unmanned aerial vehicle of claim 1, further comprising a movement control module including at least one of a motor driving the body by a rotating force, a motor driving module, and a propeller,

wherein the instructions cause the processor to determine a free flight direction, a flight path, a flight rotating force, and a flight speed of the unmanned aerial vehicle, predict the target point of the free flight and a flight posture at the target point, calculate the camera photographing direction by the flight posture at the predicted target point, calculate an adjustment angle and a rotating direction for adjusting the camera photographing direction if the camera photographing direction is different from the user direction at the target point, and control the movement control module to change the camera photographing direction in accordance with the determined adjustment angle and rotating direction.

3. The unmanned aerial vehicle of claim 1, wherein the instructions cause the processor to recognize a free flight time after the user's gesture, calculate a second motion vector from the free flight time to an arrival time at the target point, determine whether the user direction is changed through comparison of the first motion vector and the second motion vector with each other, and calculate an adjustment value for adjusting at least one of a free flight path, a rotating angle and a rotating direction of the body such that the camera photographing direction by the second motion vector coincides with the user direction during an arrival at the standstill location if the second motion vector and the first motion vector do not coincide with each other.

4. The unmanned aerial vehicle of claim 1, wherein the instructions cause the processor to determine the camera photographing direction at a first location point when a free flight starts, and calculate an adjustment value for adjusting at least one of a free flight path, a rotating angle and a rotating direction of the body such that the camera photographing direction is located in a first direction in which the camera photographing direction faces the user at a second location point of the target point if the camera photographing direction faces the user when the free flight starts, and

calculate the adjustment value for adjusting the at least one of the free flight path, the rotating angle and the rotating direction of the body such that the camera photographing direction faces a second direction that is opposite to the first direction at the second location point if the camera photographing direction is opposite to the user direction when the free flight starts.

5. The unmanned aerial vehicle of claim 1, wherein the instructions cause the processor to calculate an angle adjustment value of the camera such that the camera faces the user at the standstill location using a free flight distance and camera angle information at a free flight start time, and adjust an angle of the camera at the target point; or to compare an eye height of the user with altitude information at which the unmanned aerial vehicle hovers if the unmanned aerial vehicle arrives at the target point, and adjust an altitude of the unmanned aerial vehicle to maintain a predetermined distance from the eye height of the user.

6. The unmanned aerial vehicle of claim 1, wherein the instructions cause the processor to determine that the unmanned aerial vehicle arrives at the target point if a predetermined time elapses based on a free flight start time of the unmanned aerial vehicle or if the unmanned aerial vehicle reaches a predetermined altitude height, and perform hovering with interruption of a free flight, and photograph an image using the camera automatically or after a predetermined time elapses if the unmanned aerial vehicle arrives at the target point.

7. The unmanned aerial vehicle of claim 1, wherein the instructions cause the processor to determine movement paths, rotating angles, and rotating directions for the unmanned aerial vehicle to move from the standstill location to predetermined multiple points during an arrival at the target point if a photographing function of the unmanned aerial vehicle is set to a multi-photographing operation.

8. The unmanned aerial vehicle of claim 7, wherein the instructions cause the processor to photograph a first image in a first location after a predetermined time elapses after an arrival at the target point during the multi-photographing operation, to operate move the aerial vehicle to a predetermined second location in accordance with the determined movement paths, rotating angles, and rotating directions, photograph a second image in the moved second location, and repeat the moving and photographing operations.

9. A method for photographing a subject in an unmanned aerial vehicle, comprising:

   recognizing a user's throwing gesture of the unmanned aerial vehicle;
   determining a user direction based on a first motion vector generated by the throwing gesture;
   predicting a camera direction in a standstill location that is a target point of the unmanned aerial vehicle based on the throwing gesture;
   controlling a photographing direction of the camera such that the photographing direction and the user direction are located in a straight line in the standstill location that is the target point; and
   executing a camera photographing function when the unmanned aerial vehicle arrives at the target point.

10. The method of claim 9, wherein controlling the camera photographing direction such that the photographing direction and the user direction are located in a straight line comprises:

    determining a free flight direction, a flight path, a flight rotating force, and a flight speed of the unmanned aerial vehicle;
    predicting the target point of the free flight and a flight posture at the target point;
    calculating the camera photographing direction by the flight posture at the predicted target point;
    calculating an adjustment angle and a rotating direction for adjusting the camera photographing direction if the camera photographing direction is different from the user direction at the target point; and
    changing the camera photographing direction in accordance with the determined adjustment angle and rotating direction during the free flight of the unmanned aerial vehicle.

11. The method of claim 9, wherein controlling the camera photographing direction such that the photographing direction and the user direction are located in a straight line comprises:

    recognizing a free flight time based on gravity acceleration information after the user's gesture;
    calculating a second motion vector from the free flight time to an arrival time at the target point;
    determining whether the user direction is changed through comparison of the first motion vector and the second motion vector with each other; and
    adjusting at least one of a free flight path, a rotating angle and a rotating direction of the unmanned aerial vehicle such that the camera photographing direction by the second motion vector coincides with the user direction if the second motion vector and the first motion vector do not coincide with each other.

12. The method of claim 9, wherein controlling the camera photographing direction comprises:

    determining the camera photographing direction at a first location point when a free flight starts;
    calculating an adjustment value for adjusting at least one of a free flight path, a rotating angle and a rotating direction of the unmanned aerial vehicle such that the camera photographing direction is located in a first direction in which the camera photographing direction faces the user at a second location point of the target point if the camera photographing direction is faces the user when the free flight starts;
    calculating the adjustment value for adjusting at least one of the free flight path, the rotating angle and the rotating direction of the unmanned aerial vehicle such that the camera photographing direction faces a second direction that is opposite to the first direction at the second location point if the camera photographing direction is opposite to the user direction when the free flight starts; and
    adjusting the camera photographing direction by the calculated adjustment value.

13. The method of claim 9, wherein controlling the camera photographing direction at comprises at least one of:

    calculating an angle adjustment value of the camera such that the camera faces the user at the standstill location using a free flight distance of the unmanned aerial vehicle and camera angle information at a free flight start time, and adjusting an angle of the camera during an arrival at the target point; or comparing an eye height of the user with altitude information at which the unmanned aerial vehicle hovers if the unmanned aerial vehicle arrives at the target point,

and adjusting an altitude of the unmanned aerial vehicle to maintain a predetermined distance from the eye height of the user.

14. The method of claim 9, wherein executing the camera photographing function comprises at least one of:

photographing an image using the camera automatically or after a predetermined time elapses if the unmanned aerial vehicle arrives at the target point; or determining flight paths, rotating angles, and rotating directions for the unmanned aerial vehicle to move to predetermined multiple points based on the target point for multi-photographing if the multi-photographing is set, and repeating the moving operation to the determined multiple points and the photographing operation if the unmanned aerial vehicle arrives at the target point.

15. The method of claim 9, wherein recognizing the user's gesture comprises:

determining a type of the user's gesture; and performing the photographing operation with different options of camera photographing functions in accordance with the type of the user's gesture in executing the camera functions.

FIG. 1

# FIG. 2

200

| 210 | 220 |
|---|---|
| **APPLICATION PLATFORM**<br><br>– COMMUNICATION CONTROL<br>– VIDEO CONTROL<br>– SENSOR CONTROL<br>– CHARGING CONTROL<br>– APPLICATION CONTROL | **Flight Platform**<br><br>– FLIGHT AND POSTURE CONTROL<br>– NAVIGATION ALGORITHM |

# FIG. 3

```
┌─────────────┐
│    START    │
└─────────────┘
       │
       ▼
┌──────────────────────────────┐
│      FLY AERIAL VEHICLE       │── 310
└──────────────────────────────┘
       │
       ▼
┌──────────────────────────────┐
│ RECOGNIZE USER'S THROWING GESTURE │── 320
└──────────────────────────────┘
       │
       ▼
┌──────────────────────────────┐
│     MEASURE USER DIRECTION    │── 330
└──────────────────────────────┘
       │
       ▼
┌──────────────────────────────┐
│       START FREE FLIGHT       │── 340
└──────────────────────────────┘
       │
       ▼
┌──────────────────────────────┐
│      MEASURE MOTION VECTOR    │── 350
└──────────────────────────────┘
       │
       ▼
┌──────────────────────────────┐
│      MOVE TO TARGET LOCATION  │── 360
└──────────────────────────────┘
       │
       ▼
┌──────────────────────────────┐
│     ADJUST CAMERA DIRECTION   │── 370
└──────────────────────────────┘
       │
       ▼
┌──────────────────────────────┐
│        PHOTOGRAPH USER        │── 380
└──────────────────────────────┘
       │
       ▼
┌─────────────┐
│     END     │
└─────────────┘
```

# FIG. 4

# FIG. 5

```
        ( START )
            │
            ▼                                    510
┌─────────────────────────────────┐
│    RECOGNIZE THROWING GESTURE    │
└─────────────────────────────────┘
            │
            ▼                                    520
┌─────────────────────────────────┐              580
│  CALCULATE IMU ACCELERATION      │   ┌───────────────────────────────────┐
│  DIRECTION AND ACCELERATION      │   │ COLLECT SENSOR INFORMATION        │
│          FORCE                   │   │ (ACCELERATION, GYRO,              │
└─────────────────────────────────┘   │ GEOMAGNETIC FIELD, ULTRASONIC     │
            │                          │ WAVES, BAROMETER, AND OFS)        │
            ▼                   530    └───────────────────────────────────┘
┌─────────────────────────────────┐              │
│ SET TARGET MOVEMENT DISTANCE,    │              ▼                   581
│ MOVEMENT ALTITUDE, AND MOVEMENT  │   ┌───────────────────────────────────┐
│ ANGLE AND DETERMINE USER         │   │ CALCULATE MOVEMENT AMOUNT AND     │
│ DIRECTION (OPTION1)              │   │ ROTATION AMOUNT OF AERIAL VEHICLE │
└─────────────────────────────────┘   └───────────────────────────────────┘
            │                                     │
            ▼                   540               ▼                   582
┌─────────────────────────────────┐   ┌───────────────────────────────────┐
│        START FREE FLIGHT         │   │ CALCULATE ROTATION AMOUNT OF      │
└─────────────────────────────────┘   │ AERIAL VEHICLE IN YAW DIRECTION   │
            │                          │ AND CALCULATE ROTATION AMOUNT     │
   ┌ ─ ─ ─ ─│─ ─ ─ ─ ─ ─ ─ ─ ─ ─ ┐   │ OF CAMERA IN PITCH DIRECTION      │
   │ (OPTION 2)                    │   └───────────────────────────────────┘
   │        ▼           550        │              │
   │      ╱     ╲         NO        │              ▼                   583
   │    ╱ USER    ╲───────────────┼──>┌───────────────────────────────────┐
   │    ╲ DIRECTION?╱              │   │   CONTROL YAW ROTATION AND        │
   │      ╲     ╱                  │   │        CAMERA PITCH               │
   │        │ YES                  │   └───────────────────────────────────┘
   └ ─ ─ ─ ─│─ ─ ─ ─ ─ ─ ─ ─ ─ ─ ┘              │
            ▼◄───────────────────────────────────┘
      ╱         ╲      560
NO  ╱             ╲
◄──╱ TARGET POINT?  ╲
    ╲              ╱
      ╲         ╱
         │ YES
         ▼          570
      ╱         ╲          NO
    ╱             ╲──────────────>
   ╱ USER DIRECTION?╲
    ╲             ╱
      ╲         ╱
         │ YES     590
         ▼
┌─────────────────────────────────┐
│         PHOTOGRAPHING            │
└─────────────────────────────────┘
         │
         ▼
      ( END )
```

# FIG. 6

610

| IMU (ACCELERATION, GYRO, AND GEOMAGNETIC SENSORS) |

620

| POSTURE ALGORITHM |

630

| FLIGHT CONTROL ALGORITHM |

- CALCULATE SENSOR RAW DATA ACCORDING TO ROTATION AND ACCELERATION

- CALCULATE ACCELERATION/
- DECELERATION DIRECTION

- CONTROL HORIZONTAL ROTATION FLIGHT IN USER DIRECTION

- CONTROL VERTICAL CAMERA GIMBAL IN USER DIRECTION

# FIG. 7

TRUE NORTH DIRECTION (N)

CAMERA DIRECTION

ROTATE IN MINIMUM
ROTATION
DIRECTION

740

721

(c-2)

710

720

715

TRUE NORTH
DIRECTION (N)

730

740

721        735

TRUE NORTH DIRECTION (N)

721

740

MOVEMENT DISTANCE

DECELERATION
DIRECTION

(a)          (b)          (c-1)

| THROWING GESTURE START LOCATION | FREE FLIGHT START LOCATION | STANDSTILL LOCATION |

FIG. 8

THROWING GESTURE START LOCATION

FREE FLIGHT START LOCATION

STANDSTILL LOCATION

FLIGHT DIRECTION

ACCELERATION DIRECTION

FLIGHT DIRECTION

FLIGHT DIRECTION

ACCELERATION DIRECTION

$\theta 1$

$\theta 2$

$\dfrac{\theta 1}{F1}$

# FIG. 9

CAMERA PITCH
ANGLE CONTROL

$\theta$ b

y

910

900

$V_0$

x

$\theta$ a

GRAVITY DIRECTION

FREE FLIGHT START
LOCATION

STANDSTILL
LOCATION

FIG. 10

EP 3 336 644 A1

THROWING GESTURE
START LOCATION

FREE FLIGHT
START LOCATION

STANDSTILL
LOCATION

FIG. 11

## EUROPEAN SEARCH REPORT

Europäisches
Patentamt
European
Patent Office
Office européen
des brevets

Application Number

EP 17 20 0930

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/200209 A1 (NIXIE LABS INC [US]) 30 December 2015 (2015-12-30) | 1,2,4,6, 9,10,12, 14,15 | INV. G05D1/00 G05D1/10 |
| A | * paragraphs [0029], [0040], [0043], [0056], [0058], [0060], [0063] - [0068], [0070] - [0076], [0080], [0085]; claims 17,22,27,29-32,36,40-42; figures 1,14A,14B,15-16,17A,17B * ----- | 3,5,7,8, 11,13 | G05D1/08 |

TECHNICAL FIELDS
SEARCHED      (IPC)

G05D

The present search report has been drawn up for all claims

| Place of search | Date of completion of the search | Examiner |
|---|---|---|
| Munich | 9 May 2018 | Mallet, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

**ANNEX TO THE EUROPEAN SEARCH REPORT**
**ON EUROPEAN PATENT APPLICATION NO.**

EP 17 20 0930

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2018

| Patent document cited in search report | Publication date | Patent family member(s) | Publication date |
|---|---|---|---|
| WO 2015200209 A1 | 30-12-2015 | US 2016101856 A1<br>US 2016139602 A1<br>US 2017322563 A1<br>WO 2015200209 A1 | 14-04-2016<br>19-05-2016<br>09-11-2017<br>30-12-2015 |

EPO FORM P0459

For more details about this annex : see Official Journal of the European Patent Office, No. 12/82